(19) Europäisches Patentamt
European Patent Office
Office européen des brevets

(11) **EP 1 198 896 B1**

(12) **FASCICULE DE BREVET EUROPEEN**

(45) Date de publication et mention de la délivrance du brevet:
**02.06.2010 Bulletin 2010/22**

(51) Int Cl.:
*H04B 1/707* (2006.01)   *H04J 13/00* (2006.01)

(21) Numéro de dépôt: **00958644.7**

(22) Date de dépôt: **28.07.2000**

(86) Numéro de dépôt international:
**PCT/FR2000/002177**

(87) Numéro de publication internationale:
**WO 2001/010051 (08.02.2001 Gazette 2001/06)**

(54) **PROCEDE DE TRANSMISSION DE DONNEES UTILISANT DES JEUX REPETITIFS DE SEQUENCES D'ETALEMENT, EMETTEUR ET RECEPTEUR CORRESPONDANTS**

DATENÜBERTRAGUNGSVERFAHREN VON MIT SICH WIEDERHOLENDEN SPREIZSEQUENZSÄTZEN UND ENTSPRECHENDER SENDER UND EMPFÄNGER

DATA TRANSMISSION METHOD USING REPEATED SETS OF SPREADING SEQUENCES, CORRESPONDING TRANSMITTER AND RECEIVER

(84) Etats contractants désignés:
**DE GB IT NL**

(30) Priorité: **30.07.1999 FR 9909947**

(43) Date de publication de la demande:
**24.04.2002 Bulletin 2002/17**

(60) Demande divisionnaire:
**09178930.5 / 2 161 847**

(73) Titulaire: **Commissariat à l'Energie Atomique
75015 Paris (FR)**

(72) Inventeurs:
- **DANIELE, Norbert**
  **F-38330 Montbonnot (FR)**
- **LEVEQUE, Sébastien**
  **F-38000 Grenoble (FR)**
- **NOGUET, Dominique**
  **F-38100 Grenoble (FR)**
- **LEQUEPEYS, Jean-René**
  **F-38600 Fontaine (FR)**

(74) Mandataire: **Viering, Hans-Martin et al
Viering, Jentschura & Partner
Postfach 22 14 43
80504 München (DE)**

(56) Documents cités:
**EP-A- 0 693 834    EP-A- 0 708 534**

- **WADA T ET AL: "A CONSTANT AMPLITUDE CODING FOR ORTHOGONAL MULTI-CODE CDMA SYSTEMS" IEICE TRANSACTIONS ON FUNDAMENTALS OF ELECTRONICS, COMMUNICATIONS AND COMPUTER SCIENCES,JP,INSTITUTE OF ELECTRONICS INFORMATION AND COMM. ENG. TOKYO, vol. E80-A, no. 12, 1 décembre 1997 (1997-12-01), pages 2477-2483, XP000768674 ISSN: 0916-8508**

## Description

### Domaine technique

La présente invention a pour objet un procédé de transmission de données utilisant des jeux répétitifs de séquences d'étalement, ainsi qu'un émetteur et un récepteur correspondants.

L'invention trouve une application générale dans les communications numériques et plus particulièrement dans les réseaux locaux sans fil (WLAN), dans les boucles locales d'abonnés sans fil (WLL), en téléphonie mobile, en domotique et télécollecte, en communication dans les transports, en télévision câblée, en service multimédia sur les réseaux câblés, etc...

### Etat de la technique antérieure

L'invention relève de la technique d'étalement de spectre. On sait que cette technique consiste en la modulation d'un symbole numérique à transmettre par une séquence pseudo-aléatoire connue de l'utilisateur. Chaque séquence est composée de N éléments appelés "chips", dont la durée est le $N^{ième}$ de la durée d'un symbole. Il en résulte un signal dont le spectre s'étale sur une plage N fois plus large que celle du signal original. A la réception, la démodulation consiste à corréler le signal reçu avec la séquence utilisée à l'émission pour retrouver le symbole de départ.

Cette technique offre de nombreux avantages mais elle ne permet pas de pallier un inconvénient lié à un effet dit d'interférence entre symboles dont l'origine est la suivante. Dans un canal radioélectrique, l'onde qui se propage de l'émetteur au récepteur peut emprunter divers trajets, de sorte que, pour un même signal émis, plusieurs signaux décalés dans le temps parviennent au récepteur, avec des amplitudes et des phases différentes. La réponse du canal au signal émis est donc étalée. Le signal émis étant généralement bref, il peut être assimilé à une impulsion, et l'on parle alors de réponse impulsionnelle. Dans les systèmes à haut débit ces différentes répliques d'un même signal peuvent interférer avec les autres signaux.

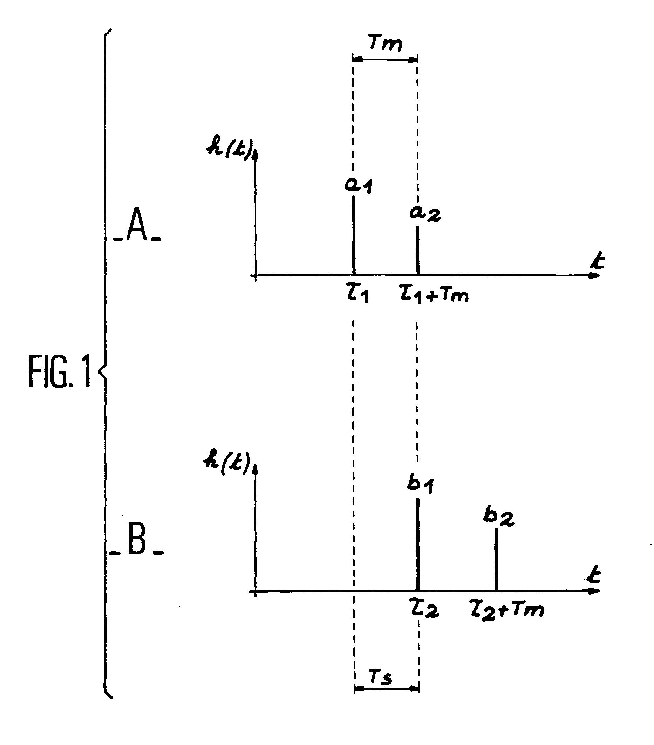

La figure 1 illustre ce phénomène. Elles représentent la réponse impulsionnelle h(t) d'un canal en fonction du temps. Sur la partie A, on suppose qu'une impulsion a été émise à un certain temps et qu'un premier signal $a_1$ a été reçu avec un certain retard $\tau_1$, suivi d'une réplique $a_2$ à l'instant $\tau_1+Tm$, où Tm représente le retard du second trajet par rapport au premier. Sur la partie B, on suppose qu'un second signal a été émis après un intervalle Ts égal à la durée d'un symbole et l'on a supposé en outre que cet intervalle était égal au retard Tm. On suppose en outre que les propriétés du canal ne se sont pas modifiées dans l'intervalle Ts, c'est-à-dire que le retard $\tau_2$ est égal à $\tau_1$ et $T_m$ est resté constant. On reçoit alors un signal $b_1$ à l'instant $\tau_2$ suivi d'une réplique $b_2$ à l'instant $\tau_2+Tm$.

Comme Ts=Tm par hypothèse, il est clair que les signaux $a_2$ et $b_1$ vont interférer et dégrader la réception. Pour éviter cette source de dégradation, il faut faire en sorte que $b_1$ apparaisse au-delà de $a_2$, c'est-à-dire que la durée Ts des symboles soit supérieure à l'étalement Tm de la réponse impulsionnelle. En d'autres termes, il faut que le débit en symboles soit inférieur à 1/Tm. Plus la réponse impulsionnelle est étalée, plus la contrainte sur le débit est grande.

Le but de l'invention est justement de remédier à cet inconvénient. En réduisant le phénomène d'interférences entre symboles, l'invention autorise des débits plus importants dans des environnements où l'étalement de la réponse impulsionnelle du canal est bien plus grande que la durée du symbole (jusqu'à 16 fois dans un exemple décrit plus loin).

Le document EP-A-0 693 834 décrit un système de radiocommunications mobiles de type CDMA dans lequel la liaison station de base/station mobile utilise l'une ou l'autre de plusieurs séquences d'étalement, la séquence utilisée à l'émission étant identifiée pour que la station mobile puisse désétaler le signal reçu. On peut transmettre le signal sur trois voies parallèles utilisant 3 codes différents, pour augmenter le débit d'information.

### Exposé de l'invention

Pour réduire les risques d'interférences entre symboles, l'invention préconise de traiter les symboles successifs avec des séquences pseudo-aléatoires différentes ce qui permet, à la réception, de mieux discriminer les signaux reçus. Selon l'invention, le nombre de séquences successives différentes est limité à un nombre S fixé. Au-delà de S séquences, on réutilise les séquences déjà utilisées. Autrement dit, on traite des paquets de S symboles par des jeux répétitifs de S séquences. Il en résulte que l'intervalle de temps au bout duquel on retrouve la même séquence pseudo-aléatoire n'est plus Ts mais S fois Ts. La contrainte sur la durée du symbole n'est donc plus Ts>Tm mais STs>Tm. En terme de débit cela signifie qu'à étalement donné le débit autorisé est S fois plus élevé que dans l'art antérieur. Il se trouve limité supérieurement non plus par 1/Tm mais par S/Tm.

Ce procédé, qui consiste à traiter des paquets de S symboles par des jeux répétitifs de S séquences pseudo-aléatoires peut encore être perfectionné en traitant en parallèle plusieurs paquets de S symboles, avec autant de jeux de séquences différentes.

De façon précise, l'invention a donc pour objet un procédé de transmission de données par étalement de spectre dans lequel :

- à l'émission : à partir de données à transmettre on constitue des symboles, on module ces symboles par étalement de spectre à l'aide de séquences pseudo-aléatoires,
- à la réception : on corrèle le signal reçu avec les séquences pseudo-aléatoires utilisées à l'émission, on retrouve les symboles émis et on restitue les données,

ce procédé étant caractérisé en ce que :

a) l'émission :

i) on constitue un jeu de S séquences pseudo-aléatoires successives différentes où S est au moins égal à 2,
ii) on groupe les symboles à transmettre en paquets successifs de S symboles chacun,
iii) on module les S symboles successifs d'un paquet par les S séquences pseudo-aléatoires successives du jeu de séquences,
iv) on réitère l'opération iii) pour les paquets successifs de S symboles, les séquences pseudo-aléatoires du jeu étant ainsi utilisées de manière répétitive,

b) à la réception :

on corrèle le signal reçu avec chacune des S séquences pseudo-aléatoires utilisées à l'émission, on restitue les paquets successifs de symboles et on restitue les données correspondantes.

La conversion effectuée à l'émission peut être une sommation.

Dans un mode de mise en oeuvre particulier, on traite en parallèle plusieurs paquets de S symboles.

L'invention a également pour objet un émetteur et un récepteur pour la mise en oeuvre de ce procédé.

**Brève description des dessins**

- la figure 1, déjà décrite, illustre le phénomène d'interférence entre symboles ;
- la figure 2 montre un mode de réalisation d'un émetteur conforme à l'invention ;
- la figure 3 montre un mode de réalisation d'un récepteur conforme à l'invention.

**Description de modes particuliers de mise en oeuvre**

Les données à transmettre sont d'abord organisées en symboles selon des techniques usuelles. Chaque symbole peut comprendre un ou plusieurs bits. Les symboles sont ensuite organisés par paquets de S. Si l'on veut, en outre, effectuer un traitement en parallèle, on dispose L paquets de S symboles en parallèle, soit au total un ensemble de M=LS symboles. Les symboles suivants sont organisés de la même manière pour constituer un nouvel ensemble de M symboles et ainsi de suite.

Le tableau I illustre cette organisation série-parallèle. Chaque case représente un symbole. Le premier ensemble de symboles est noté $S_{ij}^{1}$ où i désigne la ligne du tableau, c'est-à-dire le rang du paquet (i allant de 1 à L) et j la colonne, c'est-à-dire le rang dans le paquet (j allant de 1 à S). Dans le deuxième ensemble, les LS symboles sont notés $S_{ij}^{2}$ et ainsi de suite.

| i\j | 1 | 2 | | S | 1 | 2 | | S | |
|---|---|---|---|---|---|---|---|---|---|
| 1 | $S_{11}^1$ | $S_{12}^1$ | | $S_{1S}^1$ | $S_{11}^2$ | $S_{12}^2$ | | $S_{1S}^2$ | $S_{11}^3$ |
| 2 | $S_{21}^1$ | $S_{22}^1$ | | $S_{2S}^1$ | $S_{21}^2$ | $S_{22}^2$ | | $S_{LS}^2$ | $S_{21}^3$ |
| | | | $S_{ij}^1$ | | | | $S_{ij}^2$ | | |
| L | $S_{L1}^1$ | $S_{L2}^1$ | | $S_{LS}^1$ | $S_{L1}^2$ | $S_{L2}^2$ | | $S_{LS}^2$ | $S_{L1}^3$ |

**Tableau I**

Tous ces symboles sont traités par étalement de spectre à l'aide de LS séquences pseudo-aléatoires différentes, de préférence orthogonales. Ces séquences sont organisées comme représenté dans le tableau II. Elles sont notées $C_{ij}$, i allant de 1 à L et j allant de 1 à S.

| i\j | 1 | 2 | | S |
|---|---|---|---|---|
| 1 | $C_{11}$ | $C_{12}$ | | $C_{1S}$ |
| 2 | $C_{21}$ | $C_{22}$ | | $C_{2S}$ |
| | | | $C_{ij}$ | |
| L | $C_{L1}$ | $C_{L2}$ | | $C_{LS}$ |

**Tableau II**

Un symbole $S_{ij}$ du tableau I est traité par la séquence pseudo-aléatoire correspondante $C_{ij}$ du tableau II. Lorsque les M séquences ont été utilisées pour un ensemble de M symboles, les mêmes séquences sont réutilisées pour l'ensemble suivant de M symboles et ainsi de suite. La périodicité de réutilisation des séquences est donc $ST_s$.

Quelques exemples numériques, donnés à titre explicatif et nullement limitatif, illustreront les avantages que procurent l'invention. On suppose que l'on travaille avec un débit binaire de 2 Mbits/s en modulation QPSK ("Quaternary Phase Shift Keying"). Le nombre de bits par symbole est donc de 2. La durée Ts d'un symbole est de 1 μs. Avec un procédé selon l'état de la technique antérieure, cela signifierait que l'étalement du canal Tm devrait être limité à 1 μs. Avec l'invention, on travaille avec L voies en parallèle (avec L=M/S). Le nombre de bits transmis dans une période symbole Ts est alors m=2L. Le tableau III donne quelques exemples de l'étalement maximum $Tm_{max}$ que l'on peut admettre, pour deux valeurs de M (8 et 16) et, pour chacune, 3 valeurs de S (respectivement 4, 8 et 16).

**Tableau III**

| | M=8 | M=16 |
|---|---|---|
| S=4 | m=4 bits/symb $Tm_{max}$=8 μs | m=8 bits/symb $Tm_{max}$=16 μs |
| S=8 | m=2 bits/symb | m=4 bits/symb |

(suite)

|  | M=8 | M=16 |
|---|---|---|
|  | $Tm_{max}=8\ \mu s$ | $Tm_{max}=16\ \mu s$ |
| S=16 |  | m=2 bits/symb $Tm_{max}=16\ \mu s$ |

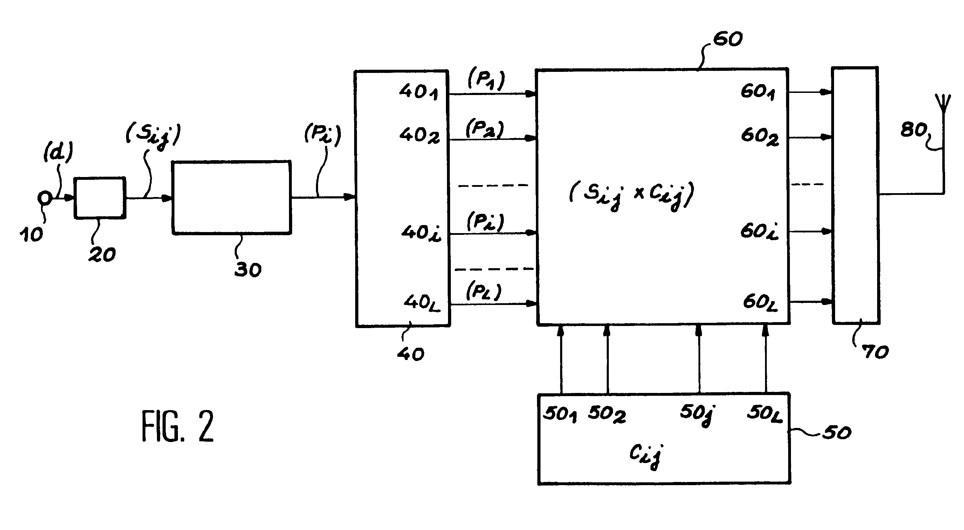

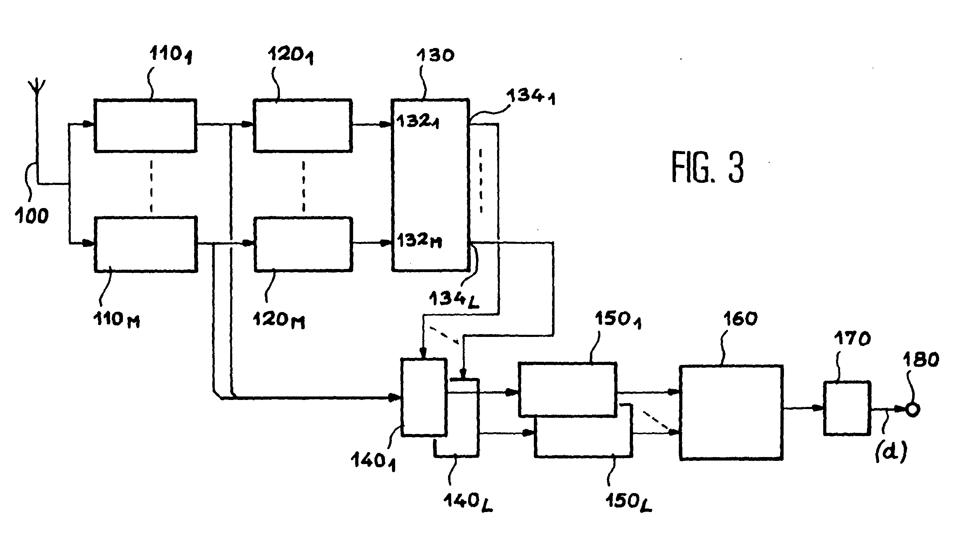

Les figures 2 et 3 illustrent des exemples de réalisation d'un émetteur et d'un récepteur conformes à l'invention. Sur la figure 2, l'émetteur comprend une entrée générale 10 recevant les données à transmettre $\underline{d}$, un circuit 20 transformant ces données en symboles (il peut s'agir d'un modulateur à décalage de phase PSK), un moyen 30 apte à former des paquets de S symboles chacun, soit $P_i$ (i allant de 1 à L). Dans la variante illustrée, l'émetteur comprend un convertisseur série-parallèle 40 à L sorties $40_1, 40_2, ..., 40_i, ..., 40_L$ délivrant les L paquets $P_i$, une table 50 de séquences pseudo-aléatoires $C_{ij}$, avec L sorties $50_1, 50_2, ..., 50_j, ... , 50_L$ délivrant L jeux de séquences, un circuit 60 d'étalement des symboles $S_{ij}$ par les séquences $C_{ij}$, ce circuit possédant L sorties $60_1, 60_2, ..., 60_i, ..., 60_L$ délivrant les symboles à spectre étalé, un sommateur 70 et enfin des moyens d'émission symbolisés par une antenne 80.

Le récepteur représenté sur la figure 3 comprend des moyens de réception symbolisés par l'antenne 100, une batterie de M filtres adaptés $110_1, ..., 110_M$, chacun de ces filtres étant adapté à l'une des séquences pseudo-aléatoires $C_{ij}$ utilisées à l'émission, une batterie de M circuits $120_1, ..., 120_M$ d'estimation de l'énergie (ou de l'amplitude) des signaux délivrés par les filtres adaptés qui précèdent, un circuit 130 à M entrées $132_1, ..., 132_M$ et à L sorties $134_1, ..., 134_L$, déterminant lesquelles des M voies d'entrée contiennent un maximum d'énergie et délivrant sur une ou plusieurs des L sorties un signal de sélection, L circuits $140_1, ..., 140_L$ à M entrées reliées aux sorties des M filtres adaptés et sélectionnant une entrée parmi M en fonction du signal de sélection reçu, L démodulateurs $150_1, ..., 150_L$, par exemple de type PSK, un circuit 160 de mise en série des L paquets de symboles délivrés par les démodulateurs, un circuit 170 restituant les données $\underline{d}$ sur une sortie générale 180.

Le traitement en parallèle n'est qu'une option, l'essentiel, selon l'invention, étant de mettre en oeuvre un jeu de plusieurs séquences successives différentes.

## Revendications

1.   Procédé de transmission de données par étalement de spectre dans lequel :

- à l'émission : à partir de données à transmettre on constitue des symboles, on module ces symboles par étalement de spectre à l'aide de séquences pseudo-aléatoires,

ce procédé étant **caractérisé en ce que** :

a) l'émission :

i) on constitue un jeu de S séquences pseudo-aléatoires successives différentes où S est au moins égal à 2,
ii) on groupe les symboles à transmettre en paquets successifs de S symboles chacun,
iii) on module les S symboles successifs d'un paquet par les S séquences pseudo-aléatoires successives du jeu de séquences,
iv) on réitère l'opération iii) pour les paquets successifs de S symboles, les séquences pseudo-aléatoires du jeu étant ainsi utilisées de manière répétitive.

2.   Procédé selon la revendication 1, dans lequel on traite en parallèle plusieurs paquets de S symboles.

3.   Emetteur pour la mise en oeuvre du procédé selon la revendication 1, comprenant une entrée générale (10), des moyens (20) pour recevoir des données à transmettre et pour constituer des symboles, et des moyens (60) pour moduler ces symboles par étalement de spectre à l'aide de séquences pseudo-aléatoires, **caractérisé en ce qu'**il comprend :

- des moyens (50) pour constituer un ensemble de S séquences pseudo-aléatoires successives différentes, où S est au moins égal à 2.
- des moyens (30, 40) pour grouper les symboles à transmettre en paquets successifs de S symboles chacun,
- des moyens (60) pour moduler les symboles successifs d'un paquet par les S séquences pseudo-aléatoires successives du jeu de séquences, et pour réitérer cette modulation pour les paquets successifs de symboles, les séquences pseudo-aléatoires du jeu étant ainsi utilisées de manière répétitive.

4. Emetteur selon la revendication 3, dans lequel les moyens traitent les paquets de symboles successifs en série et en parallèle.

5. Récepteur pour la mise en oeuvre d'un procédé de transmission de données par étalement de spectre, comprenant des moyens pour corréler un signal de réception avec des séquences pseudo-aléatoires et pour délivrer des symboles, des moyens pour restituer les données à partir de ces symboles, **caractérisé en ce qu'**il comprend :

- un moyen de filtrage ($110_1$,..., $110_M$) pour chaque séquence pseudo-aléatoire de S séquences pseudo-aléatoires, où S est au moins égal à 2, pour corréler le signal reçu avec la séquence pseudo-aléatoire,
- des moyens pour estimer ($120_1$,..., $120_M$), pour chaque moyen de filtrage, l'énergie de la corrélation du signal reçu avec la séquence pseudo-aléatoire,
- un moyen (130) pour déterminer le moyen de filtrage pour lequel l'énergie de corrélation du signal reçu avec la séquence pseudo-aléatoire parmi les énergies estimées est maximale;
- des moyens ($140_1$,..., $140_L$) pour sélectionner le moyen de filtrage pour lequel l'énergie de corrélation du signal
- reçu avec la séquence pseudo-aléatoire est maximale comme entrée pour des moyens ($150_1$,..., $150_L$) pour restituer des paquets de S symboles,
- des moyens (170) pour restituer les données correspondantes sur une sortie générale (180).

6. Récepteur selon la revendication 5, dans lequel les moyens traitent les paquets de symboles successifs en série et en parallèle.

7. Procédé de transmission de données par étalement de spectre dans lequel :

- à l'émission : à partir de données à transmettre on constitue des symboles, on module ces symboles par étalement de spectre à l'aide de séquences pseudo-aléatoires,
- à la réception : on corrèle le signal reçu avec les séquences pseudo-aléatoires utilisées à l'émission, on retrouve les symboles émis et on restitue les données, ce procédé étant **caractérisé en ce que** :

a) l'émission :

i) on constitue un jeu de S séquences pseudo-aléatoires successives différentes où S est au moins égal à 2,
ii) on groupe les symboles à transmettre en paquets successifs de S symboles chacun,
iii) on module les S symboles successifs d'un paquet par les S séquences pseudo-aléatoires successives du jeu de séquences, ,
iv) on réitère l'opération iii) pour les paquets successifs de S symboles, les séquences pseudo-aléatoires du jeu étant ainsi utilisées de manière répétitive,

b) à la réception :

on corrèle le signal reçu avec chacune des S séquences pseudo-aléatoires utilisées à l'émission, on restitue les paquets successifs de symboles et on restitue les données correspondantes.

## Claims

1. Spectrum spreading data transmission process wherein:

- in sending: symbols are built up from the data to be transmitted and these symbols are modulated by spectrum spreading using pseudo-random sequences,

this process being **characterized in that**:

a) in sending:

i) a set of S successive different pseudo-random sequences is built up, in which S is at least equal to 2,
ii) the symbols to be transmitted are grouped into successive packets each containing S symbols,
iii) the S successive symbols of a packet are modulated by the S successive pseudo-random sequences of the set of sequences,
iv) operation iii) is repeated for successive packets of S symbols, the pseudo-random sequences in the set thus being used repetitively.

2. The process according to claim 1, wherein several packets of S symbols are processed in parallel.

3. Transmitter for executing the process according to claim 1, comprising a general input (10), means (20) for receiving data to be transmitted and for building up symbols, and means (60) for modulating these symbols by spectrum spreading using pseudo-random sequences, **characterized in that** it comprises:

- means (50) for building up a set of S successive different pseudo-random sequences, in which S is at least equal to 2,
- means (30, 40) for grouping the symbols to be transmitted into packets each containing S successive symbols,
- means (60) for modulating the successive symbols of a packet by the S successive pseudo-random sequences of the set of successive pseudo-random sequences, and for reiterating the modulation for the successive packets of symbols, the pseudo-random sequences of the set thus being used repetitively.

4. Transmitter according to claim 3, wherein the means process the packets of successive symbols in series and in parallel.

5. Receiver for executing a spectrum spreading data transmission process, comprising means for correlating a reception signal with pseudo-random sequences and for outputting symbols, and means for recovering data from these symbols, **characterized in that** it further comprises:

- a filter means ($110_1$, ..., $110_M$) for each pseudo-random sequence of S pseudo-random sequences, in which S is at least equal to 2, for correlating the received signal with the pseudo-random sequence,
- means for estimating ($120_1$, ..., $120_M$), for each filter means, the energy of the correlation of the received signal with the pseudo-random sequence,
- a means (130) for determining the filter means for which the energy of the correlation of the received signal with the pseudo-random sequence is maximum among the estimated energies;
- means ($140_1$, ..., $140_M$) for selecting the filter means for which the energy of the correlation of the received signal with the pseudo-random sequence is maximum as input to means ($150_1$, ..., $150_L$) for recovering packets of S symbols,
- means (170) for recovering corresponding data on a general output (180).

6. Receiver according to claim 5, wherein the means process the packets of successive symbols in series and in parallel.

7. Spectrum spreading data transmission process wherein:

- in sending: symbols are built up from the data to be transmitted and these symbols are modulated by spectrum spreading using pseudo-random sequences,
- on reception: the received signal is correlated with the pseudo-random sequences used in sending, the symbols sent are found and the data are restored,
this process being **characterized in that**:

a) in sending:

i) a set of S successive different pseudo-random sequences is built up, in which S is at least equal to 2,
ii) the symbols to be transmitted are grouped into successive packets each containing S symbols,
iii) the S successive symbols of a packet are modulated by the S successive pseudo-random sequences of the set of sequences,
iv) operation iii) is repeated for successive packets of S symbols, the pseudo-random sequences in the set thus being used repetitively,

b) on reception:

the received signal is correlated with each of the S pseudo-random sequences used in sending, the successive packets of symbols are restored and the corresponding data are restored.

**Patentansprüche**

1. Verfahren zum Übertragen von Daten mittels Spektrumsspreizung bei dem:

   - beim Senden: Aus den zu übertragenden Daten bildet man Symbole und moduliert diese Symbole mittels Spektrumsspreizung mit Hilfe von pseudozufälligen Folgen,

   wobei das Verfahren charakterisiert ist durch:

   a) Senden:

   i) man bildet eine Menge von S sukzessiven, unterschiedlichen, pseudozufälligen Folgen wobei S mindestens gleich 2 ist,
   ii) man gruppiert die zu übertragenden Symbole in sukzessive Pakete mit jeweils S Symbolen,
   iii) man moduliert die S sukzessiven Symbole eines Pakets mit den S sukzessiven, pseudozufälligen Folgen der Menge von Folgen,
   iv) man wiederholt die Operation iii) für die sukzessiven Pakete mit S Symbolen, wobei die pseudozufälligen Folgen der Menge auf diese Weise auf repetitive Art verwendet werden.

2. Verfahren gemäß Anspruch 1, bei dem man mehrere Pakete mit S Symbolen parallel verarbeitet.

3. Sender zum Durchführen des Verfahrens gemäß Anspruch 1, aufweisend einen allgemeinen Eingang (10), Mittel (20) zum Empfangen von zu übertragenden Daten und zum Bilden von Symbolen und Mittel (60) zum Modulieren dieser Symbole mittels Spektrumsspreizung mit Hilfe von pseudo-zufälligen Folgen, **dadurch** charakterisiert, dass es aufweist:

   - Mittel (50) zum Bilden einer Menge von S sukzessiven, unterschiedlichen, pseudozufälligen Folgen, wobei S mindestens gleich 2 ist.
   - Mittel (30, 40) zum Gruppieren der zu übertragenden Symbole in sukzessive Pakete mit jeweils S Symbolen,
   - Mittel (60) zum Modulieren der sukzessiven Symbole eines Pakets mittels der S sukzessiven, pseudo-zufälligen Folgen der Menge von Folgen und zum Wiederholen dieser Modulation für die sukzessiven Pakete von Symbolen, wobei die pseudozufälligen Folgen der Menge auf diese Weise auf repetitive Art verwendet werden.

4. Sender gemäß Anspruch 3, bei dem die Mittel die sukzessiven Pakete von Symbolen seriell und parallel verarbeiten.

5. Empfänger zum Durchführen eines Verfahrens zum übertragen von Daten mittels Spektrumsspreizung, aufweisend Mittel zum Korrelieren eines Empfangssignals mit pseudozufälligen Folgen und zum Ausgeben von Symbolen und Mittel zum Wiederherstellen der Daten aus diesen Symbolen, **dadurch** charakterisiert, dass es aufweist:

   - ein Filtermittel ($110_1$, ... ,$110_M$) für jede pseudozufällige Folge der S pseudozufälligen Folgen, wobei S mindestens gleich 2 ist, zum Korrelieren des empfangenen Signals mit der pseudozufälligen Folge,
   - Mittel zum Schätzen ($120_1$, ... ,$120_M$), für jedes Filtermittel, der Energie der Korrelation des empfangenen Signals mit der pseudo-zufälligen Folge,
   - ein Mittel (130) zum Bestimmen des Filtermittels, für das die Energie der Korrelation des empfangenen Signals mit der pseudo-zufälligen Folge unter den geschätzten Energien maximal ist;
   - Mittel ($140_1$, ... ,$140_L$) zum Auswählen des Filtermittels, für das die Korrelationsenergie des empfangenen Signals mit der pseudo-zufälligen Folge maximal ist als Eingang für Mittel ($150_1$, ... ,$150_L$) zum Wiederherstellen von Pakten von S Symbolen,
   - Mittel (170) zum Wiederherstellen der entsprechenden Daten an einem allgemeinen Ausgang (180).

6. Empfänger gemäß Anspruch 5, in dem die Mittel die sukzessiven Pakete von Symbolen seriell und parallel verarbeiten.

7. Verfahren zum Übertragen von Daten mittels Spektrumsspreizung bei dem:

- beim Senden: aus den zu übertragenden Daten bildet man Symbole und moduliert diese Symbole mittels Spektrumsspreizung mit Hilfe von pseudozufälligen Folgen,
- beim Empfangen: Man korreliert das empfangene signal mit dem pseudozufälligen Folgen, die beim Senden verwendet wurden, man gewinnt die gesendeten Symbole wieder und man stellt die Daten wieder her,

wobei das Verfahren charakterisiert ist durch:

a) Senden:

i) man bildet eine Menge von S sukzessiven, unterschiedlichen, pseudozufälligen Folgen wobei S mindestens gleich 2 ist,
ii) man gruppiert die zu übertragenden Symbole in sukzessive Pakete mit jeweils S Symbolen,
iii) man moduliert die S sukzessiven Symbole eines Pakets mit den S sukzessiven, pseudozufälligen Folgen der Menge von Folgen,
iv) man wiederholt die Operation iii) für die sukzessiven Pakete mit S Symbolen, wobei die pseudozufälligen Folgen der Menge auf diese Weise auf repetitive Art verwendet werden,

b) beim Empfangen:

Man korreliert das empfangene Signal mit jeder der S pseudozufälligen Folgen, die beim Senden verwendet wurden, man stellt die sukzessiven Pakete von Symbolen wieder her und man stellt die entsprechenden Daten wieder her.

FIG.1

FIG. 2

FIG. 3

EP 1 198 896 B1

**EP 1 198 896 B1**

**RÉFÉRENCES CITÉES DANS LA DESCRIPTION**

**Documents brevets cités dans la description**

- EP 0693834 A